# EUROPEAN PATENT SPECIFICATION

(11) **EP 2 309 678 B1**
(45) Date of publication and mention of the grant of the patent: **24.04.2013**
(21) Application number: 09252389.3
(22) Date of filing: 08.10.2009
(51) Int. Cl.: H04L 12/437

(54) **An ethernet network component**
Ethernet-Netzwerkkomponente
Composant de réseau Ethernet

(43) Date of publication of application: 13.04.2011
(73) Proprietor: NXP B.V., 5656 AG Eindhoven (NL)
(72) Inventor: Noel, Denis, Redhill, Surrey RH1 1DL (GB); De Troch, Stefan, Redhill, Surrey RH1 1DL (GB)
(74) Representative: Burton, Nick

(56) References cited:
- WO-A1-2004/056049
- WO-A1-2006/108881
- WO-A1-2009/014581

## Description

The present disclosure relates to the field of Ethernet network components and methods of operating Ethernet network components.

Ethernet is a known family of frame-based computer networking technologies for local area networks (LANs), and is standardised as IEE 802.3.

Another type of network that is known to be used for networking in the automotive industry is the media oriented system transport (MOST) technology. MOST provides synchronous data exchange and allows devices to be able to provide content, and others to render that content.

WO 2006/108881 (BAUMUELLER ANLAGEN SYSTEMTECHN) discloses a method for tolerating the breakdown and/or decoupling of at least one network node in a communication network used for controlling and/or adjusting the movement of a plurality of machine parts.

WO 2004/056049 (Areva T & D SA) discloses an Ethernet network comprising a plurality of Ethernet switches and a plurality of repeaters exchanging payload frames originating from external equipment.

WO 2009/014581 (Thomson Licensing) discloses a network interface apparatus capable of bypassing an inoperable or failed network device.

The listing or discussion of a prior published document or any background in the specification should not necessarily be taken as an acknowledgement that the document or background is part of the state of the art or is common general knowledge.

A first aspect of the invention is defined by claim 1..

It will be appreciated that selectively including or excluding the Ethernet network component can comprise selectively providing a bypass path across the Ethernet network component along which a signal will flow instead of flowing through the Ethernet network component.

Bypassing the Ethernet network component in this way can enable an efficient network to be provided. Through use of appropriate control signalling, Ethernet network components can be excluded from a network in order to improve the performance of the network. For example, faculty nodes/components can be bypassed out of the network in order to improve traffic flow around the network and/or inactive nodes/components can be bypassed out of the network in order to reduce the power consumption of the network.

The Ethernet network component may be excluded from a network when the bypass switch is in an "on" position. The Ethernet network component may be included in a network when the bypass switch is in an "off" position.

The first and second terminals may be for connecting the Ethernet network component to a network. The terminals may be considered as "network-side" terminals.

There may be provided an Ethernet network component for a ring network, which may be an open or closed ring network. Such embodiments of the invention can improve traffic flow around a ring network.

The Ethernet network component may be for the PHY or MAC layer of the Ethernet protocol.

The control signalling may be representative of an automatic determination that the Ethernet network component has failed. In this way, an Ethernet network component can be automatically included or excluded from a network.

The control signalling may be representative of user input, for example the user input may be an indication that the Ethernet network component is not in use or is faulty. This can allow a user to tailor the components that are included in the network in accordance with their personal preferences or to take into account a user's knowledge of the status of one or more Ethernet network components.

The control signalling may be representative of an operating state of a device or system associated with the Ethernet network component, or a status of a network in which the Ethernet network component is incorporated. For example, different Ethernet network components may be available/required depending upon the operating state of an associated device/system/network, and use of such control signalling can reduce power consumption of components that are not required.

The bypass switch may be an electro-mechanical device such as a micro-electro-mechanical system (MEMS) device, a relay or any suitable semiconductor device, or a combination of such elements.

The Ethernet network component may be configured to monitor data packets flowing through the bypass switch. The Ethernet network component may be configured to operate the bypass switch to include the Ethernet network component in the network if a Wake-Up on LAN (WoL) packet, or any other "wake-up" signalling, is detected/received. In this way, the Ethernet network component can automatically wake itself up, and include itself in the network, as required.

An Ethernet network component may be provided that is configured to process/analyse a data packet received at a first terminal, and:
discard the data packet if a source address of the data packet represents an identifier of the Ethernet network component itself; or
transmit the data packet on the second terminal if the source address of the data packet does not represent an identifier of the Ethernet network component

In this way the possibility of endless looping of data packets around a closed loop Ethernet network can be avoided/reduced. In such embodiments, a bypass switch to bypass the terminals of the Ethernet network terminal may not be required, and therefore one or more embodiments that are configured to reduce/avoid endless packet looping may or may not include a bypass switch between Ethernet network terminals.

Each Ethernet network component/node may be connected to a ring using an Ethernet switch, which hereafter will be referred to as an Ethernet bridge to distinguish from the "bypass switch" between terminals of an Ethernet network component. The Ethernet bridge may be modified to avoid endless packet looping on the ring by filtering out packets originating from stations connected to the bridge and coming from the ring. The Ethernet bridge can be implemented in hardware or software. An advantage associated with this feature can be that Ethernet devices/components behind the Ethernet bridge can be unmodified: that is, in order to include one or more Ethernet components in the ring, changes may only be required to an Ethernet bridge and not the underlying Ethernet component.

The Ethernet network component or the Ethernet bridge may be configured to process/analyse the source address, or any other characteristic/parameter of a data packet received at one of its first and second terminals, and determine whether or not the data packet should be transmitted on the other of the first and second terminal, or whether the data packet should be discarded.

The Ethernet network component or the Ethernet bridge may be configured to determine that a received data packet should not be transmitted if the source address of the data packet represents the Ethernet network component, the next Ethernet component in a closed loop, or any component associated with the Ethernet network component.

The Ethernet network components, which may be considered as, or comprise, stations or group of stations, may be connected to one or more open or closed rings. Multiple closed rings may provide for data to flow in the same or opposite directions. The Ethernet network components may be connected to a closed ring using a single full duplex Ethernet transceiver per ring and node.

The multiple rings, if more than one are provided, may be used in different ways, including but not limited to a configuration where time critical packets such as audiovideo streams are transmitted on one ring, and asynchronous traffic is sent on other(s) rings. Optionally, possibly different protocols can be used on the different rings. Such examples can provide networks with improved functionality over the prior art, for example in terms of data throughput, system reliability, and quality of service.

The different rings and associated PHYs can use different technology. The different technologies may be from the same family such as various Ethernet speeds, or may use different transmission technologies and transmission speeds such as Gigabits (Gbits) links.

Transmit and receive lines of PHY components that may be provided as part of the Ethernet network component may be connected at both ends of each ring node. Cables connected to Ethernet network components of the present invention can be made of differential pairs, shielded or unshielded, or optical fibers or any other transmission medium. The wires or fibers may or may not be combined into a single or a set of different cables. In some examples, wireless communication technologies can be used.

There may be provided an Ethernet network comprising one or more Ethernet network components disclosed herein. The network may be an inter IC network.

According to a further aspect of the invention, there is provided a method of operating an Ethernet network component having a first terminal, a second terminal and a bypass switch connected between the first terminal and the second terminal, the method comprising:
receiving control signalling; and
operating the bypass switch in accordance with the control signalling in order to either include or exclude the Ethernet network component from an associated Ethernet network.

There may be provided apparatus comprising one or more Ethernet network components disclosed herein, or any Ethernet network disclosed herein. The apparatus may be an automobile such as a car.

According to a further aspect of the invention there is provided a computer program, which when run on a computer, causes the computer to configure any apparatus, including a component or circuit, disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium such as a disc or a memory device, or may be embodied as a transient signal. Such a transient signal may be a network download, including an internet download.

A description is now given, by way of example only, with reference to the accompanying drawings, in which:
Figure 1 shows a prior art Ethernet network topology;
Figure 2 shows a further prior art Ethernet network topology;
Figure 3 shows a prior art node for an open ring topology;
Figure 4 illustrates an Ethernet network component according to an embodiment of the invention;
Figure 5 shows an Ethernet network component according to another embodiment of the invention;
Figure 6a shows an Ethernet network component according to an embodiment of the invention connected to a network;
Figure 6b shows a network comprising Ethernet network components according to an embodiment of the invention;
Figure 7a shows a Ethernet network component according to an embodiment of the invention for a closed ring topology; and
Figure 7b shows an Ethernet network topology according to an embodiment of the invention.

One or more embodiments described herein relate to an Ethernet network component having a bypass switch between two of its terminals. The bypass switch can be operated in order to bypass the Ethernet network component out of a network. The bypass switch can be controlled by a control signal such that the Ethernet network component can be automatically or manually excluded from the network as required. For example, an Ethernet network component may be excluded from a network if it has failed, or if it is not required. This can reduce unnecessary power consumption and/or enable data to flow around the network even if one of the Ethernet network components has failed.

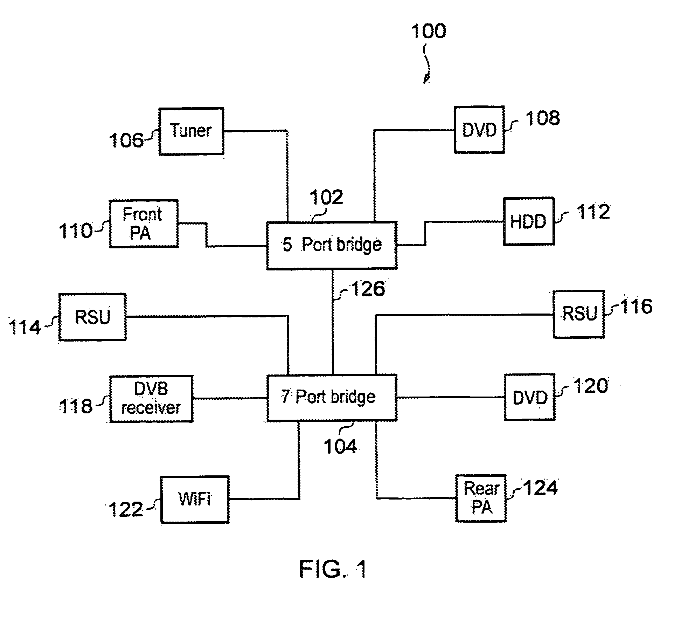

Figure 1 shows a prior art multi-star Ethernet network topology 100. The topology of Figure 1 is based on Ethernet bridges, and in this example the topology 100 comprises a first bridge 102 having five ports and a second bridge 104 having seven ports.

The following four components are connected to the first bridge 102: a tuner 106, a digital versatile disc (DVD) player 108, a front power amplifier (PA) 110 , and a hard disc drive (HDD) 112. The following six components are connected to the second bridge 104: two rear seat unit (RSU) display screens 114, 116, a digital video broadcasting (DVB) receiver 118, a DVD player 120, a WiFi module 122 and rear PA module 124. The components that are connected to the Ethernet network may be known as Ethernet stations.

The first and second bridges 102, 104 are also in electronic communication with each other via link 126, which uses the remaining port of each of the bridges 102, 104.

An advantage of this topology is that the network switching complexity is localized in just two bridges 102, 104. This can be important when dealing with an audio video bridging (AVB) Ethernet network for which Quality-Of-Service provisions are mainly implemented in the bridges: the data packets are buffered in different queues according their type (audio/video, data etc.) and they are forwarded according to a determined scheme. For example, bridges can reserve bandwidth for high priority traffic, etc.

The number of hops (that is, the number of times data is transferred between components before it gets to its destination) is limited according to the topology of Figure 1, and this minimizes transport delays.

However, a disadvantage of a star topology is that some links are critical, for example the link 126 between bridges 102, 104, and the total length of cables involved in such a topology may be large.

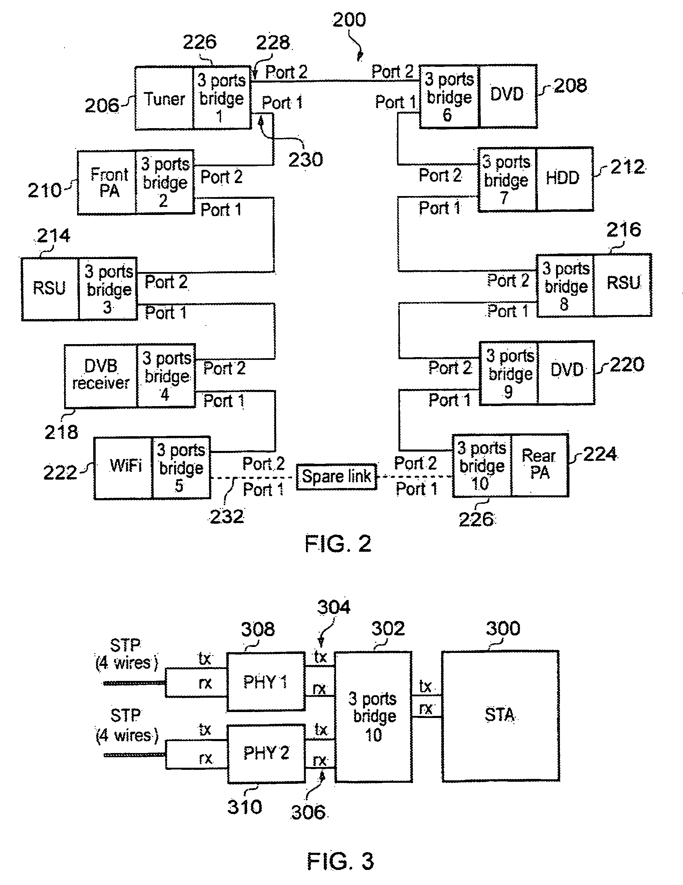

Figure 2 shows a prior art bidirectional open ring Ethernet network topology 200. The Ethernet stations 206 to 224 are similar to the Ethernet stations 106 to 124 of Figure 1, and in this example each Ethernet station/node in the ring has an associated three port bridge 226.

Each three port bridge 226 has two external ports 228, 230 to connect to neighbouring Ethernet stations in the ring (through a physical layer PHY), with the third port being connected to the Ethernet station 206 to 224. The third port of the bridge 226 is connected to the Ethernet station 206 to 224 through the physical layer PHY or by directly connecting the media access controllers (MACs) in a proprietary way.

As known in the art, a "spare link" 232 is provided between two of the Ethernet stations (in this example, between the WiFi component 222 and rear PA 224). The spare link 232 is initially not connected to provide an open-ring and ensure that the network is loop-free. If required, for example due to failure of another link in the network, the spare link 232 can be connected to provide an open loop that includes all of the Ethernet stations with the broken link ensuring that a closed loop is not provided. A known spanning tree protocol can be used to disable bridge ports in the system 200 and ensure that a closed loop is not provided.

The configuration of Figure 2 decreases the cabling when compared with a star topology as shown in Figure 1, and provides the possibility of building cable redundancy (for example using spanning tree protocol) as shown by spare link 232 in Figure 2. That is, if a bridge or a cable in the network 200 fails, then the spare link 232 at the bottom of the ring can be enabled between previously unused ports (port 1 of both bridges associated with the WiFi station 222 and the rear PA station 224).

Drawbacks associated with the topology of Figure 2 include a distribution of complexity if an AVB standard is used. This is because each bridge must implement AVB provisions, including multiple queues, bandwidth reservation mechanisms, etc. Also, a packet may have to traverse a number of Ethernet stations 206 to 224 before reaching its destination, and this may be referred to as a potentially high number of hops. A high number of hops increases transport delay and buffering required by the system.

Figure 3 illustrates a node/Ethernet component connected to a prior art open ring Ethernet network. The node comprises a station 300 connected to a three port bridge 302 by transmit and receive lines. A first port 304 of the bridge 302 is connected to a first physical layer (PHY) component 308 using transmit and receive lines. Similarly, a second port 306 of the bridge 302 is connected to a second PHY component 310. The first and second ports 304, 306 may be considered as network-side ports. It will be appreciated that the physical layer is known as the first and lowest layer in the seven-layer OSI model of computer networking. The data link layer is the second layer and can comprise a media access control (MAC) sub layer.

Each of the first and second PHY components 308, 310 have a transmit and receive terminal that are connected to the network by shielded twisted pair (STP) cables, each comprising four wires.

As shown in Figure 3, and as will be appreciated by the skilled man, the multi-star and ring network topologies shown as Figures 1 and 2 share the same number of PHY transceivers in the system. That is, for a system of N devices, 2N PHY components are necessary.

For the ring configuration of Figure 2, each node is connected to each side of the ring using either two twisted pairs (one for transmit, one for receive), or combining transmit and receive on the same differential pair as shown in Figure 3, and this may involve using echo cancellation techniques.

For the multi-star topology of Figure 1, a PHY is needed at each side of a node link.

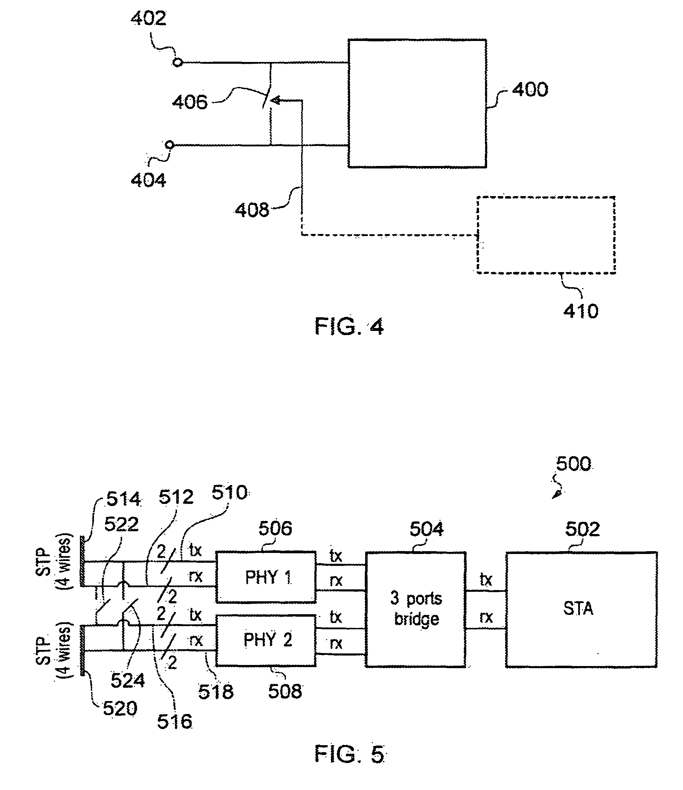

Figure 4 shows an Ethernet network component 400 according to an embodiment of the invention. The Ethernet network component 400 has a first terminal 402 and a second terminal 404 for connecting to a network. The first and second terminals 402, 404 may be considered as network-side terminals.

A bypass switch 406 is coupled between the first terminal 402 and second terminal 404, and is operable in accordance with a control signal 408. The bypass switch 406 may be considered as a bypass switch.

When the bypass switch 406 is open, there is no direct connection between the two terminals 402, 404, and any signals received at the first terminal 402 must pass through the Ethernet network component 400 before being provided to the second terminal 404, and vice versa.

In contrast, when the bypass switch 406 is closed, a bypass signal path is provided such that any signals received at the first terminal 402 can be passed on to the second terminal 404 without flowing through the Ethernet network component 400, and vice versa.

In this way, the bypass switch 406 can be operated in accordance with a control signal 408 to either include or exclude the Ethernet network component 400 from a network.

The control signal 408 may be received from a network controller 410. The network controller 410 can automatically generate a control signal to operate the bypass switch 406 in accordance with one or more predefined events. Alternatively, the network controller 410 can generate the control signal 408 in response to user input.

Examples of when a network controller 410 may automatically generate control signalling 408 to close the bypass switch 406 can be upon the determination that the Ethernet network component is faulty or not in use. This information may readily be available, for example from an on-board diagnostics (OBD) system that may already be present in a vehicle. Alternatively, one or more suitable sensors may be incorporated into a system, such as a car, to provide information as to whether or not an Ethernet network component/station is faulty and/or operational.

In some embodiments, the control signalling 408 may representative of an operating state of a device or system associated with the Ethernet network component, or a status of a network in which the Ethernet network component is incorporated. For example, if the Ethernet network component is associated with an automobile, then different Ethernet network components may be available/required depending upon the operating state of the automobile. The radio may be available for use when the car's ignition is on irrespective whether or not the engine is running; an on-board DVD player may only be available when the ignition is on and the engine is not running; or a Bluetooth hands-free kit for a mobile phone may only be considered as necessary when the car is moving or the handbrake is off. In such examples, the control signalling may be automatically configured in accordance with the operating state of the automobile to selectively bypass one or more Ethernet network components.

An Ethernet network component/ node can experience a failure because
- Its power supply is down for any reason, for example due to a broken cable, device shortcut in the node, etc;
- The Ethernet PHY(s) or MAC(s) experience(s) a defect; or
- The bridge experiences a defect, which may be a software or hardware bug/problem.

If the power supply is down, then the node terminals may be automatically bypassed using an electromechanical device (MEMS or relay). A bypass position may be the default when no power supply is provided to the node, and in particular to the network module of the node (bridge, transceivers).

If the Ethernet PHY(s), MAC(s) or bridge experience(s) a defect, then the failure may need to be detected. One way of detecting a failure is to test the node operations by bypassing the ring terminals, using the same bypass switches (loopback mode). The connection to the ring can be checked in the same way as a regular Ethernet device as known in the art. The Ethernet bridge core functionality may be checked by applying a system test (as opposed to a self test) by sending test packets from some devices in the network with acknowledgment.

An Ethernet network component may also be bypassed to power down an Ethernet bridge when the station(s) attached to the bridge do not participate in the network and are powered down. In such an example, the traffic at the considered node can be immediately put on the cable connected to the next node through the bypass device/switch without travelling and being forwarded by the bridge. In some examples, the packets received at the bridge/node can still be monitored by the transceiver in order for the node to be woken up remotely using, for example, the Wake-Up on LAN procedure.

In such examples, the only devices that consume power are the PHY component and a small portion of the MAC component that is attached to the PHY in order to scan incoming packets and detect WoL packets. This can still offer power consumption and efficiency advantages over the prior art.

In some examples, a user may be provided with an interface, for example a touch sensitive screen, that they can use to provide an indication as to whether or not a component that is present on the Ethernet network is required for use. In this way a user can reduce the power that is consumed by the Ethernet network by bypassing Ethernet network components and the power that they consume.

In some embodiments, bypassing a faulty Ethernet network component can be used to remove a breakage/open circuit in the network loop. This can provide for continued usage of other Ethernet network components that are present on the same loop as the faulty Ethernet network component.

It will be appreciated that the Ethernet network component 400 may have network terminals 402, 404 at the physical (PHY) layer, the media access controller (MAC) sublayer, or at any other layer that has terminals that can connect to a network.

Figure 5 shows an Ethernet network component 500 according to a further embodiment of the invention. The Ethernet network component 500 comprises a station 502 a three port bridge 504 and two PHY components 506, 508. One port of the bridge 504 is connected to the station 502, another port of the bridge 504 is connected to one of the PHY components 506, and the other port of the bridge 504 is connected to the other PHY component 508. Each of the ports of the bridge 504 comprises a receive and a transmit connector. It will be appreciated that these components are similar to the corresponding components of Figure 3.

The first PHY component 506 has a transmit port 510 and receive port 512 on the network side of the PHY component 506. Each of the transmit port 510 and receive port 512 consisting of two lines each. A shielded twisted pair cable consisting of four wires is connected to each of the transmit and receive ports 510, 512 of the PHY component 506. The STP cable 514 along with the transmit and receive ports 510, 512 may be considered together as a first terminal of the Ethernet network component 500.

The second PHY component 508 also has transmit and receive port 516, 518, which together with an associated STP cable 520 may be considered as a second terminal of the Ethernet network component.

Provided between the transmit port 510 of PHY 1 506 and the receive port 518 PHY 2 508 is a first bypass switch 524. Provided between the receive port 512 PHY 1 506 and the transmit port 516 of PHY 2 508 is a second bypass switch 522. The first and second bypass switches 524, 522 may be a relay, a micro-electro-mechanical system (MEMS) device or any other semiconductor device that can make a mechanical or electrical bypass between the two terminals. The Ethernet network component 500 may be part of an Ethernet network having a ring topology, such that the Ethernet network component/node 500 can be bypassed when it experiences a failure or the Ethernet station 502 of the Ethernet network component 500 is to be shut down, for example because its functionality is not needed.

Use of the first and/or second bypass switches 522, 524 to bypass the Ethernet network component can enable power consumption of the Ethernet network component 500 to be reduced and/or minimised without effecting the interconnection of other Ethernet network components in the network. The Ethernet network component 500 of Figure 5 may be suitable for incorporation into a bidirectional open ring topology such as that illustrated in Figure 2.

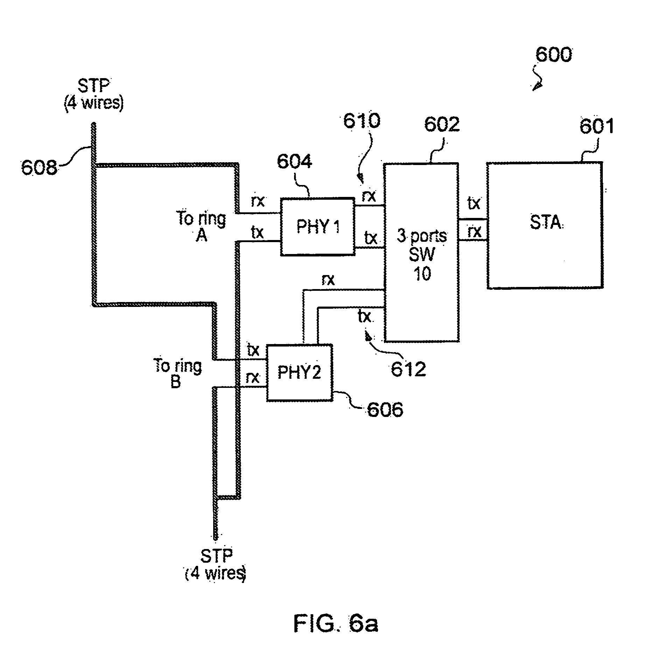

Figure 6a illustrates a further embodiment of the invention comprising an Ethernet network component 600. The Ethernet component 600 comprises an Ethernet station 601 that is connected to a three port bridge 602 using the first port of the bridge 602. The second port 610 of the bridge 602 is connected to a first PHY component 604. The first PHY component 604 has a network side transmit port and a network side receive port that are each coupled to two of the wires from a four-wire STP network cable 608. The two wires that are connected to the first PHY component 604 form part of a first ring: Ring A.

The third port 612 of the bridge 602 is connected to a second PHY component 606. The second PHY component 606 also has a network side transmit port and network side receive port that are each coupled to the other two wires of the STP network cable 608. The two wires that are connected to the second PHY component 606 form part of a second ring: Ring B.

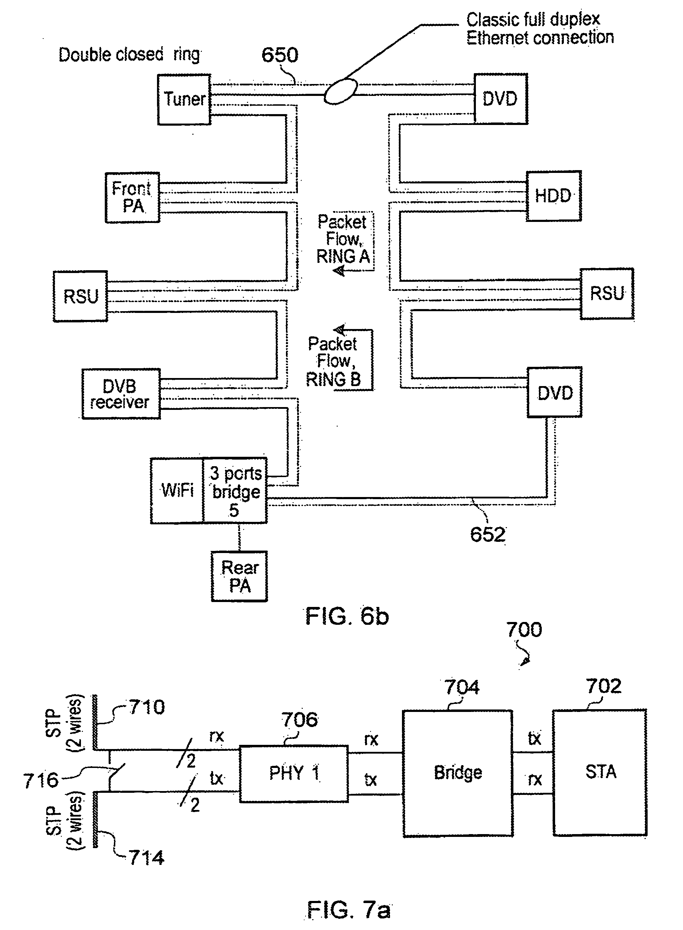

An example of a double unidirectional closed loop ring topology with which the Ethernet network component 600 can be used is shown as Figure 6b. In Figure 6b a first ring (such as Ring A) is shown in dashed lines with reference 650, and a second ring (such as Ring B) is shown in solid lines with reference 652. It will be appreciated that data can flow in the same direction on each of the rings 650, 652, or in opposite directions on each of the rings 650, 652. Networks in which data flows on each of the rings 650, 652 in opposite directions can reduce/minimize the number of hops that are required for transmitted data to reach any recipient station in the network.

In examples where data flows on each of the rings in different directions, management of the address/port mapping table (filtering database) of the Ethernet bridge can be adapted accordingly to ensure correct routing of packets between the two rings that are not necessarily operating independently. In some examples, a node of the network can bypass its terminal on one ring while being included in the network on the other ring. That is, an Ethernet network component can be included in a first ring of an Ethernet network whilst being excluded from a second ring of the Ethernet network.

It will be appreciated that even though Ring A and Ring B are both provided by the same STP network cable 608, there is no electrical connection between the wires of the cable 608 and therefore the two rings are functionally independent of each other. In addition, the MAC addresses on the two rings should also be different for a regular Ethernet bridge in order to ensure independent traffic on the two rings so that the network will operate correctly.

Advantages associated with a network component such as that illustrated by Figure 6 can include:
- Increasing system reliability by providing a duplicate network ring;
- Doubling instantaneous data throughput, while keeping bit rate at the same speed. For example, a 200 Mbps network can be provided based on 100BT Ethernet, or a 2 Gbps network can be provided based on 1 G Ethernet;
- Providing another approach to Quality of Service issues (for example, isochronous streaming of Ethernet), at least as an alternative to Ethernet AVB.

In some examples, a double ring, such as Rings A and B of Figure 6, can be used to differentiate best effort traffic from time critical traffic. That is, a time triggered system could be implemented on one ring, while the other ring could use a known Ethernet protocol for transporting asynchronous traffic in a best effort approach.

For example, Ring A could transport audio video content with a transport slot reservation mechanism, while a burst of data from the reading of a DVD could be transported on Ring B without disturbing traffic and bandwidth reservation mechanisms on Ring A.

In some examples, the bridge 602 can be designed in order to avoid contention between the two traffic types. Separate data queues may be used such that a queue is mapped on each ring-side port to differentiate traffic type from STA 601 (using source port or packet tagging). It will be appreciated that different bridge implementations/architectures are possible, and can be selected in accordance with objectives that can include constant/configurable traffic independence.

In some embodiments, the connection between the station 601 and the bridge 602 may include a PHY on each side (STA and bridge) or may be connected without a PHY in a proprietary manner. Also, more than one station 601 could be connected to a bridge 602. For example a larger bridge could be used to connect to a plurality of stations/nodes.

The embodiments described herein use twisted wire pairs for the cabling. However, it will be appreciated that other cable types may be used with embodiments of the invention, including optical fibers.

The PHY can be a standard PHY (10BT, 100BT, Gigabit Ethernet) or can be proprietary. In particular, a second ring, if there is one, could be of another type than Ethernet ring or packet switched network. For example one of the rings could be a Gigabits (Gbits) pixel link for raw (uncompressed) video streaming, "HDMI-like".

A ring system or a double ring system according to some embodiments of the invention can support other signals that are multiplexed with Ethernet signals, for example Gigabits pixel link signals may be multiplexed with Ethernet signals.

It will be appreciated that embodiments of the invention disclosed herein that provide two independent ring topologies, can be further extended to provide any number of rings.

Advantages associated with embodiments of the invention can include a reduction in the number of components and cost per node, which can be provided by a reduction in buffering required by the bridges, use of a single transceiver, and shorter cable lengths. Alternatively, for an equivalent cost compared with the prior art, the Quality of Service (including competition between different traffic types) of Ethernet networks can be improved.

The approach described in relation to Figure 6 can be used to build two independent networks (rings) using the same number of PHY components that are used for a single prior art open ring network topology as shown in Figure 2.

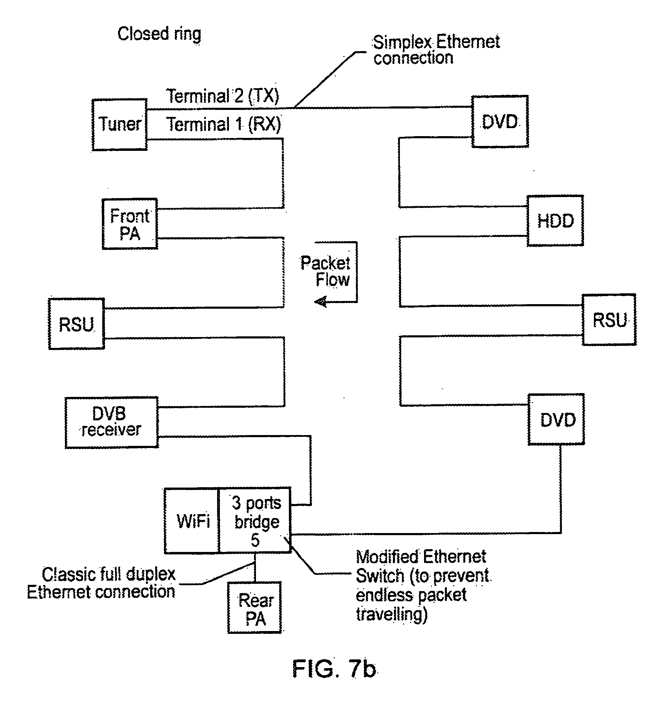

A further embodiment of the invention relates to a ring topology/system where the number of PHY components can be reduced, for example reduced by half. One such embodiment of an Ethernet component 700 is shown as Figure 7a and uses a single PHY component 706 for each station 702. Connected between the PHY component 706 and the station 702 is a bridge 704. The embodiment shown in Figure 7a is suitable for single unidirectional closed loop ring topologies, for example as illustrated in Figure 7b. The transmit and receive cables 710, 714 of the PHY component 706 are split so that data can only flow into and out of an Ethernet network component 700 in a single direction, that is, a first terminal of the Ethernet network component 700 consists of only a transmit port and a second terminal of the Ethernet network component 700 consists of only a receive port.

As the Ethernet network component 700 allows information to flow/circulate in one direction, the network must be a closed loop (unidirectional ring) in order for data packets to be able to reach any destination station.

As shown in Figure 7a, if a three port full or half duplex bridge 704 is used, then only the functionality of two of the full/half duplex ports are used. The PHY 706 should run in full duplex mode, and this can be considered as a commodity using switched Ethernet networks.

A bypass switch 716 is connected between the first and second terminals of the Ethernet network component 700 in order to provide a bypass path across the Ethernet network component 700 in same way as discussed in relation to Figures 4 and 5.

Problems can occur when operating an Ethernet network as a closed loop and the network should be designed in such a way that packets are not endlessly looping around the ring. An example of when data packets might endlessly loop around a closed loop is when an Ethernet station broadcasts or multicasts data packets. It will be appreciated that the description of the functionality that follows is independent of the bypass switch 716. Therefore, one or more embodiments described herein that address "endless looping" of data may, or may not, also include a bypass switch 716 and/or functionality related to the bypass switch 716.

The bridge 704 of Figure 7a is configured such that it filters out data packets that it receives (from the ring) that have been emitted from its associated Ethernet station 702: that is, the Ethernet station 702 that is attached to the bridge 704. This filtering can be achieved by monitoring the source address of data packets received at a bridge's 704 receive port/terminal.

In this way, data packets can be monitored as they pass around a closed ring network topology. The data packets can be passed on around the loop by an Ethernet network component if the associated Ethernet station was not the original source of the data packet, or the Ethernet network component can discard the data packet it was the original source of the data packet. This can prevent a data packet from endlessly looping around an Ethernet closed ring network because the data packet is automatically discarded when it has travelled around a complete loop of the network stations/terminals.

It will be appreciated that in other embodiments, the determination as to whether or not a packet received from the ring should be discarded by a bridge can be based on any means that uniquely identifies whether or not the data packet has already completed a full loop of the network.

Known Ethernet networks and components can provide high throughput of data compared to the required bandwidth, and good reliability. This can mean that any disadvantages in terms of a lack of redundancy in data links can be considered insignificant or inconsequential. The high quality of service that is achievable with Ethernet components can mean that it is considered not necessary to have a spare link, and therefore a closed loop network topology can be deemed acceptable. It will be appreciated that the quality of service provided by a system such as that shown in Figure 7a is comparable with known media oriented system transport (MOST) systems.

An advantage over known network components, including those associated with MOST technology, can include the use of a simplified bridge 708. The bridge 708 of Figure 7a only includes two receive ports, and two transmit ports. This reduction in ports, and therefore reduction in hardware, can be advantageous, and in turn, can possibly require less buffers than are needed by the prior art networks. Furthermore, a significant cost reduction can be achieved by using only N full duplex PHY components for N stations; instead of the 2N PHY components that are required by the prior art as shown in Figure 3.

It will be appreciated that the bridge implementation can be either hardware or software.

The embodiment of Figure 7a, and corresponding closed ring networks, can provide one or more of:
- Stations or group of stations that are connected to a closed ring, or multiple closed rings, system using a single full duplex Ethernet transceiver per ring and node;
- Each node being connected to the ring using a special bridge modified to avoid endless packet looping on the ring by filtering out packets originating from the station(s) connected to the bridge and coming from the ring;
- The transmit and receive lines of the PHY components being connected at both ends of each ring node.

It will be appreciated that one or more embodiments described herein can provide a convenient implementation of an Ethernet network for an automotive environment, particularly for multimedia or entertainment data exchange in an automobile environment, although it will be appreciated that embodiments can also be used in any other environment, for example to build an inter-IC network.

## Claims

1. An automobile comprising:
an Ethernet network component (400) having a first terminal (402), a second terminal (404) and a bypass switch (406) connected between the first terminal (402) and the second terminal (404), wherein the bypass switch (404) is operable in accordance with control signalling (40B) to either include or exclude the Ethernet network component (400) from an associated Ethernet network, and the control signalling (408) is representative of an operating state of the automobile; and
an on-board diagnostics system or one or more sensors, the on-board diagnostics system or one or more sensors are configured to generate the control signalling (408).

2. The automobile of claim 1, wherein the bypass switch (404) is operable in accordance with control signalling (408) In order to exclude the Ethernet network component (400) if it is not required.

3. The Automobile of claim 1 or claim 2, wherein the Ethernet network component (400) is for a ring network.

4. The automobile of any preceding claim, wherein the Ethernet network component is for the PHY or MAC layer of the Ethernet protocol.

5. The automobile of any preceding claim, wherein the bypass switch (406) is an electro-mechanical device such as a micro-electro-mechanical system device, a relay or a semiconductor device.

6. The automobile of claim 5, wherein the electro-mechanical device is configured to automatically bypass the Ethernet network component (400) when no power is provided to the Ethernet network component (400).

7. The automobile of any preceding claim, wherein the Ethernet network component (400) is configured to monitor data packets flowing through the bypass switch (406), and to operate the bypass switch (406) to include the Ethernet network component (400) in the network if a Wake-Up on LAN (WoL) packet is detected.

8. The automobile of any preceding claim, wherein the Ethernet network component Is configured to process a data packet received at the first terminal, and:
discard the data packet if a source address of the data packet represents an identifier of the Ethernet network component (400); or
transmit the data packet at the second terminal (404) if the source address of the data packet does not represent an identifier of the Ethernet network component (400).

9. The automobile of any preceding claim, wherein the Ethernet network component (400) is connected to one or more closed rings.

10. The automobile of claim 9, wherein different closed rings use different technology including one or more of:
technologies that use different Ethernet speeds, and
different transmission technologies.

11. An Ethernet network comprising one or more of the Ethernet network components of the automobile of any preceding claim.

12. A method of operating an Ethernet network component (400) having a first terminal (402), a second terminal (404) and a bypass switch (406) connected between the first terminal (402) and the second terminal (404), the method comprising:
receiving control signalling (408) representative of an operating state of an automobile In which the Ethernet network component (400) is incorporated; and
operating the bypass switch (406) in accordance with the control signalling (408) in order to either include or exclude the Ethernet network component (400) from an associated Ethernet network.

13. A computer program, which when run on a computer, causes the computer to configure the network component of the automobile of any one of claims 1 to 10 or the Ethernet network of claim 11, or perform the method of claim 12.

## Patentansprüche

1. Ein Fahrzeug, welches aufweist:
eine Ethernet-Netzwerkkomponente (400), welche einen ersten Anschluss (402), einen zweiten Anschluss (404) und einen Bypassschalter (406) hat, welcher zwischen dem ersten Anschluss (402) und dem zweiten Anschluss (404) verbunden ist, wobei der Bypassschalter (404) in Übereinstimmung mit einem Steuersignalisieren (408) betreibbar ist, um entweder die Ethernet-Netzwerkkomponente (400) von einem assoziierten Ethernet-Netzwerk einzuschließen oder auszuschließen, und das Steuersignalisieren (408) repräsentativ für einen Betriebszustand des Fahrzeugs ist, und
ein On-Board-Diagnostiksystem oder einen oder mehrere Sensoren, wobei das On-Board-Diagnostiksystem oder der eine Sensor oder die mehreren Sensoren konfiguriert sind, um das Steuersignalisieren (408) zu generieren.

2. Das Fahrzeug gemäß Anspruch 1, wobei der Bypassschalter (404) in Übereinstimmung mit dem Steuersignalisieren (408) betreibbar ist, um die Ethernet-Netzwerkkomponente (400) auszuschließen, falls sie nicht benötigt wird.

3. Das Fahrzeug gemäß Anspruch 1 oder Anspruch 2, wobei die Ethernet-Netzwerkkomponente (400) für ein Ringnetzwerk ist.

4. Das Fahrzeug gemäß irgendeinem vorherigen Anspruch, wobei die Ethernet-Netzwerkkomponente für die PHY oder MAC Schicht des Ethernet-Protokolls ist.

5. Das Fahrzeug gemäß irgendeinem vorherigen Anspruch, wobei der Bypassschalter (406) eine elektromechanische Vorrichtung wie zum Beispiel eine Mikro-Elektromechanische-System-Vorrichtung, ein Relais oder eine Halbleitervorrichtung ist.

6. Das Fahrzeug gemäß Anspruch 5, wobei die elektromechanische Vorrichtung konfiguriert ist, um automatisch die Ethernet-Netzwerkkomponente (400) zu überbrücken, wenn keine Leistung an die Ethernet-Netzwerkkomponente (400) bereitgestellt ist.

7. Das Fahrzeug gemäß irgendeinem vorherigen Anspruch, wobei die Ethernet-Netzwerkkomponente (400) konfiguriert ist, um Datenpakete zu beobachten, welche durch den Bypassschalter (406) hindurchfließen, und um den Bypassschalter (406) zu betreiben, um die Netzwerkkomponente (400) in das Netzwerk einzuschließen, falls ein Wake-Up on LAN (WOL) Paket detektiert ist.

8. Das Fahrzeug gemäß irgendeinem vorherigen Anspruch, wobei die Ethernet-Netzwerkkomponente konfiguriert ist, um
ein Datenpaket zu verarbeiten, welches an dem ersten Anschluss empfangen ist, und das Datenpaket zu verwerfen, falls eine Quelladresse des Datenpakets einen Identifizierer der Ethernet-Netzwerkkomponente (400) repräsentiert, oder
das Datenpaket an den zweiten Anschluss (404) zu übertragen, falls die Quelladresse des Datenpakets nicht einen Identifizierer der Ethernet-Netzwerkkomponente (400) repräsentiert.

9. Das Fahrzeug gemäß irgendeinem vorherigen Anspruch, wobei die Ethernet-Netzwerkkomponente (400) mit einem geschlossenen Ring oder mehreren geschlossenen Ringen verbunden ist.

10. Das Fahrzeug gemäß Anspruch 9, wobei unterschiedliche geschlossene Ringe eine unterschiedliche Technologie verwenden einschließlich einer oder mehrerer von:
Technologien, welche unterschiedliche Ethernet-Geschwindigkeiten verwenden, und unterschiedliche Übertragungsstechnologien.

11. Ein Ethernet-Netzwerk, welches einen oder mehrere der Ethernet-Netzwerkkomponenten des Fahrzeugs von irgendeinem vorherigen Anspruch aufweist.

12. Ein Verfahren zum Betreiben einer Ethernet-Netzwerkkomponente (400), welche einen ersten Anschluss (402), einen zweiten Anschluss (404) und einen Bypassschalter (406) hat, welcher zwischen dem ersten Anschluss (402) und dem zweiten Anschluss (404) verbunden ist, wobei das Verfahren aufweist:
Empfangen von Steuersignalisieren (408), welches repräsentativ für einen Betriebszustand eines Fahrzeugs ist, in welchem die Ethernet-Netzwerkkomponente (400) enthalten ist, und
Betreiben des Bypassschalters (406) in Übereinstimmung mit dem Steuersignalisieren (408), um entweder die Ethernet-Netzwerkkomponente (400) aus einem assoziierten Ethernet-Netzwerk einzuschließen oder auszuschließen.

13. Ein Computerprogramm, welches, wenn es auf einem Computer abläuft, den Computer veranlasst, die Netzwerkkomponente des Fahrzeugs gemäß irgendeinem der Ansprüche 1 bis 10 oder das Ethernet-Netzwerk gemäß Anspruch 11 zu konfigurieren oder das Verfahren gemäß Anspruch 12 durchzuführen.

## Revendications

1. Automobile comprenant :
un composant de réseau Ethernet. (400) comprenant une première borne (402), une deuxième borne (404) et un commutateur de dérivation (406) connecté entre la première borne (402) et la deuxième borne (404), dans laquelle le commutateur de dérivation (406) est apte à fonctionner en conformité avec un signal de commande (408) pour inclure le composant de réseau Ethernet. (400) dans un réseau Ethernet. associé ou l'en exclure, et le signal de commande (408) est représentatif d'un état de fonctionnement de l'automobile ; et
un système de diagnostic embarqué ou un ou plusieurs capteurs, le système de diagnostic embarqué ou le ou les capteurs étant configuré(s) pour générer le signal de commande (408).

2. Automobile selon la revendication 1, dans laquelle le commutateur de dérivation (406) est apte à fonctionner en conformité avec le signal de commande (408) pour exclure le composant de réseau Ethernet. (400) si celui-ci n'est pas requis.

3. Automobile selon la revendication 1 ou la revendication 2, dans laquelle le composant de réseau Ethernet. (400) est destiné à un réseau en anneau.

4. Automobile selon l'une quelconque des revendications précédentes, dans laquelle le composant de réseau Ethernet. (400) est destiné à la couche PHY ou à la couche MAC du protocole Ethernet.

5. Automobile selon l'une quelconque des revendications précédentes, dans laquelle le commutateur de dérivation (406) est un dispositif électromécanique tel qu'un dispositif de microsystème électromécanique, un relais ou un dispositif à semiconducteur.

6. Automobile selon la revendication 5, dans laquelle le dispositif électromécanique est configuré pour court-circuiter automatiquement le composant de réseau Ethernet. (400) lorsqu'aucune puissance n'est fournie au composant de réseau Ethernet. (400).

7. Automobile selon l'une quelconque des revendications précédentes, dans laquelle le composant de réseau Ethernet. (400) est configuré pour surveiller des paquets de données qui passent par le commutateur de dérivation (406), et pour faire fonctionner le commutateur de dérivation (406) de manière à inclure le composant de réseau Ethernet. (400) dans le réseau si un paquet de réveil par le réseau (WoL) est détecté.

8. Automobile selon l'une quelconque des revendications précédentes, dans laquelle le composant de réseau Ethernet. est configuré pour traiter un paquet de données reçu au niveau de la première borne, et :
écarter le paquet de données si une adresse d'origine du paquet de données représente un identifiant du composant de réseau Ethernet. (400) ; ou
transmettre le paquet de données au niveau de la deuxième borne (404) si l'adresse d'origine du paquet de données ne représente pas un identifiant du composant de réseau Ethernet. (400).

9. Automobile selon l'une quelconque des revendications précédentes, dans laquelle le composant de réseau Ethernet. (400) est connecté à un ou plusieurs anneaux fermés.

10. Automobile selon la revendication 9, dans laquelle différents anneaux fermés utilisent différentes technologies comprenant l'une ou plusieurs des suivantes :
des technologies qui utilisent différentes vitesses Ethernet, et
différentes technologies de transmission.

11. Réseau Ethernet. comprenant un ou plusieurs des composants de réseau Ethernet. de l'automobile selon l'une quelconque des revendications précédentes.

12. Procédé de mise en oeuvre d'un composant de réseau Ethernet. (400) comprenant une première borne (402), une deuxième borne (404) et un commutateur de dérivation (406) connecté entre la première borne (402) et la deuxième borne (404), le procédé comprenant :
la réception d'un signal de commande (408) représentatif d'un état de fonctionnement d'une automobile dans laquelle le composant de réseau Ethernet. (400) est incorporé ; et
le fonctionnement du commutateur de dérivation (406) en conformité avec le signal de commande (408) pour inclure le composant de réseau Ethernet. (400) dans un réseau Ethernet. associé ou l'en exclure.

13. Programme d'ordinateur qui, lorsqu'il fonctionne sur un ordinateur, a pour effet que l'ordinateur configure le composant de réseau de l'automobile selon l'une quelconque des revendications 1 à 10 ou le réseau Ethernet. selon la revendication 11, ou qu'il met en oeuvre le procédé selon la revendication 12.
